# EUROPEAN PATENT APPLICATION

(11) **EP 1 783 513 A2**
(43) Date of publication of application: **09.05.2007**
(21) Application number: 06254377.2
(22) Date of filing: 21.08.2006
(51) Int. Cl.: G01S 7/499, G01S 7/484, G01S 7/497, G01S 7/481

(54) **Variable polarization attenuator**

(30) Priority: 28.10.2005 US 261957
(71) Applicant: ROSEMOUNT AEROSPACE INC., Burnsville, MN 55306 (US)
(72) Inventor: Halama, Gary E., Burnsville, Minnesota 55306 (US)
(74) Representative: Cross, Rupert Edward Blount

(57) **Abstract**

A laser transmitting system includes a laser source configured to transmit a laser beam at an original transmit intensity. The system also includes a laser intensity adjusting mechanism positioned in the path of the transmitted laser beam. The laser intensity adjusting mechanism is controllable to reduce the intensity of the laser beam from the original transmit intensity. The system also includes a controller coupled to the laser intensity adjusting mechanism. The controller is configured to automatically control the laser intensity adjusting mechanism based upon a safety criteria. Methods of controlling a laser transmitting system are also provided.

## Description

### BACKGROUND OF THE INVENTION

Disclosed embodiments relate generally to laser based sensing devices. More particularly, disclosed embodiments relate to laser transmitting devices such as the type used in lidar systems. The discussion below is merely provided for general background information and is not intended to be used as an aid in determining the scope of the claimed subject matter.

Lidar systems are measuring systems that detect and locate objects using the same principles as radar, but using light from a laser. Lidar systems can be used on aircraft, for example, for a number of purposes. One example of a lidar system on an aircraft is an altimeter which uses laser range finding to identify a height of the aircraft above the ground. Another example of a lidar system on an aircraft could include a system which detects air turbulence. Other uses on aircraft are possible, for example including on-ground range finding for purposes of on-ground navigation of aircraft in proximity to airports, etc. Non-aircraft uses of lidar systems are also possible.

One potential problem with some lidar systems relates to the types of lasers used. Frequently, lidar systems use laser sources that are inexpensive and readily available. Many of these lasers emit light in the visible and near infrared wavelengths, which can be an eye hazard if the beam intensity is too high. While the aircraft is moving, the potential eye hazard is reduced, because it is unlikely that a person will have a prolonged exposure. However, while the aircraft is stationary on the ground, the ground crew could be exposed to this hazard. Some potential for eye hazards also exists in situations where an aircraft is flying at low airspeeds and a low altitude, though the risk is not likely to be high.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In accordance with an example embodiment, a laser transmitting system includes a laser source configured to transmit a laser beam at an original transmit intensity. The system also includes a laser intensity adjusting mechanism positioned in the path of the transmitted laser beam. The laser intensity adjusting mechanism is controllable to reduce the intensity of the laser beam from the original transmit intensity. The system also includes a controller coupled to the laser intensity adjusting mechanism. The controller is configured to automatically control the laser intensity adjusting mechanism based upon a safety criteria Disclosed embodiments also include methods of controlling a laser transmitting system.

The laser transmitting system can be, in some embodiments, a lidar system such as a laser altimeter on board an aircraft. One example of a safety criteria is an altitude of the aircraft on which the laser transmitting system is positioned. Other examples of safety criteria can include identifying whether personnel are in the vicinity of the aircraft, a rate of speed of the aircraft, power level, etc.

### BRIEF DESCRIPTION OF THE DRAWINGS

FIG. 1 is a diagrammatic illustration of a laser transmitting system, in accordance with disclosed embodiments, positioned on an aircraft.
FIG. 2 is a block diagram illustrating an embodiment of a laser transmitting system.
FIGS. 3-1 and 3-2 are diagrammatic illustrations of a variable polarization attenuator used in embodiments of the laser transmitting system shown in FIG. 2.
FIG. 4 is a diagrammatic illustration and a plot illustrating transmission as a function of angle between the incident linear polarization vector and the polarization direction of the exit polarizer (analyzer) in an example variable polarization attenuator embodiment.
FIG. 5 is an illustration of an example variable polarization attenuator embodiment.
FIG. 6 is a flow diagram illustrating a disclosed method embodiment.

### DETAILED DESCRIPTION OF ILLUSTRATIVE EMBODIMENTS

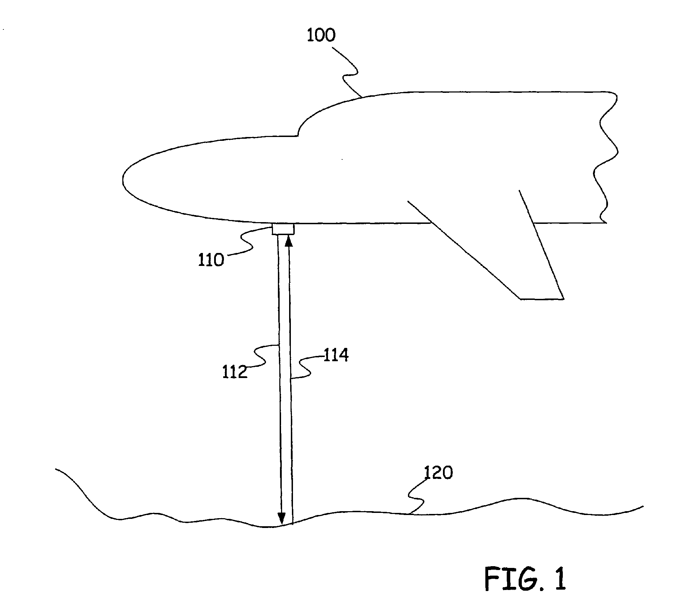

FIG. 1 is a diagrammatic illustration of an aircraft 100 with a laser transmitting system 110 in accordance with disclosed embodiments. Laser transmitting system 110 is, in exemplary embodiments, a lidar system, for example a laser altimeter system. This type of laser transmitting system 110 can be used to transmit a laser beam 112 toward a surface 120 (for example the ground, a structure or other types of surfaces). By detecting the reflected energy 114, system 110 can detect the presence of surface 120. Based upon the timing between transmission of laser beam 112 and detection of reflected energy 114, a range or distance between system 110 (and thus aircraft 100) and surface 120 can be estimated using well known techniques.

As noted above, lidar systems frequently use laser sources that emit light in the visible and near infrared wavelengths, which can be an eye hazard if the beam intensity is too high. On the other hand, if the beam intensity is not high enough at high altitudes, the system performance may suffer. As a non-limiting example, a typical lidar system can range find to the ground when flying below altitudes of approximately 2500 feet. An eye hazard from the laser beam exists at much closer proximity, however, for example beginning at around 42 feet in one example. While the aircraft 100 is moving, the potential eye hazard is reduced because it is extremely unlikely that a person will have a prolonged exposure. However, while the aircraft is stationary on the ground, the ground crew could be exposed to this hazard. The potential eye hazard also exists at low altitudes and airspeeds, for example to an individual who would happen to be observing the aircraft through binoculars. In one example, the eye hazard range would be extended, when a person is viewing the aircraft through binoculars, to around 150 feet. These ranges are provided merely as examples, and those of skill in the art will recognize that the ranges depend on a number of factors, including the power or intensity of the transmitted beam. Disclosed embodiments include use of a power attenuating device or mechanism which adjusts the laser intensity under the control of a control. These embodiments attenuate the transmit beam from its original transmit intensity, reducing the power output to an eye safe level when eye hazards are most severe (low altitudes, on ground, etc).

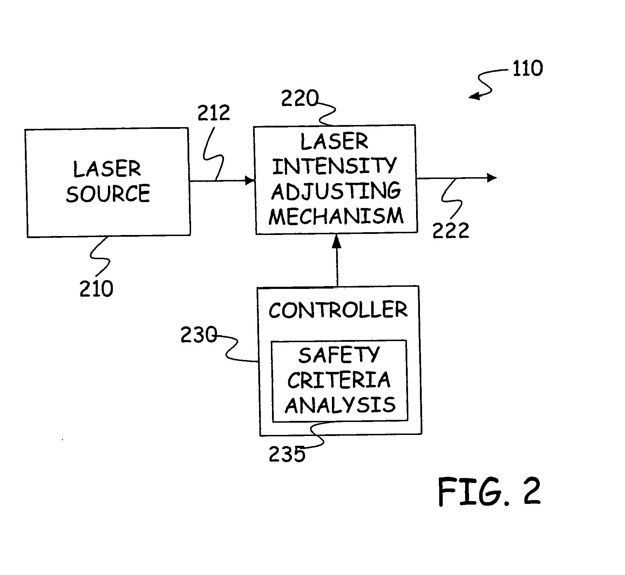

FIG. 2 is a block diagram illustrating an embodiment of laser transmitting system 110 in greater detail. Laser transmitting system 110 includes a laser source 210 which is configured to transmit a laser beam 212 at an original transmit power or intensity. The laser beam 212 is typically a pulsed light, as opposed to a continuously transmitted beam. The original transmit intensity, combined with the transmission wavelength of the laser beam together can be hazardous to a human eye in some embodiments.

As shown in FIG. 2, laser transmitting system 110 also includes a laser intensity adjusting mechanism 220 positioned in the path of the transmitted laser beam 212 (transmitted at the original transmit intensity), and a controller 230. Controller 230 is coupled to the laser intensity adjusting mechanism 220 and is configured to automatically control mechanism 220 based upon a safety criteria. A safety criteria analysis module or method implemented by controller 230 is illustrated at 235. The laser intensity adjusting mechanism 220 is controlled by controller 230, based upon a safety criteria, to reduce the intensity of the laser beam from the original transmit intensity in some situations. This attenuated laser beam is illustrated in FIG. 2 at reference number 222.

The safety criteria can be a number of different criteria determined in a variety of different manners. For example, the safety criteria can include an altitude of an aircraft 100 on which the laser transmitting system 110 is positioned. In one embodiment, if the laser source is transmitting while the aircraft is above some minimum altitude, 150 feet for example, laser intensity adjusting mechanism 220 is controlled such that there is no attenuation of the transmit intensity or power. In other words, laser beam 222 exiting mechanism 220 has substantially the same power or intensity as laser beam 212 entering mechanism 220. However, when aircraft 100 drops below the minimum altitude, the safety criteria analysis performed by controller 230 identifies this fact and mechanism 220 is controlled accordingly to attenuate the power of the laser beam. This attenuation can be two state in nature (on or off), or it can be over some continuum (discrete or continuously changing), where the lower the aircraft altitude, the greater the attenuation of the transmitted beam. Other safety criteria can include, for example, the detection of personnel in the vicinity of the laser transmitting system, ground speed of the aircraft, airspeed of the aircraft, power level, etc.

In exemplary embodiments, the laser intensity adjusting mechanism 220 includes a variable polarizing attenuator (VPA). Variable polarizing attenuators are commonly available devices which attenuate light under the control of a control signal. Frequently, VPAs are voltage controlled devices. In accordance with disclosed embodiments, a VPA is used in a laser above ground level (LAGL) sensor system or other system under the control of a controller and based on a safety criteria to reduce the eye hazard by switching between high and low intensity states. As described above, for a LAGL sensor, the VPA will allow transmission at high intensity while it is above a defined hazard range, but will switch to one or more low intensity transmission states when it is below the defined hazard range, thereby protecting all ground personnel from the laser hazard.

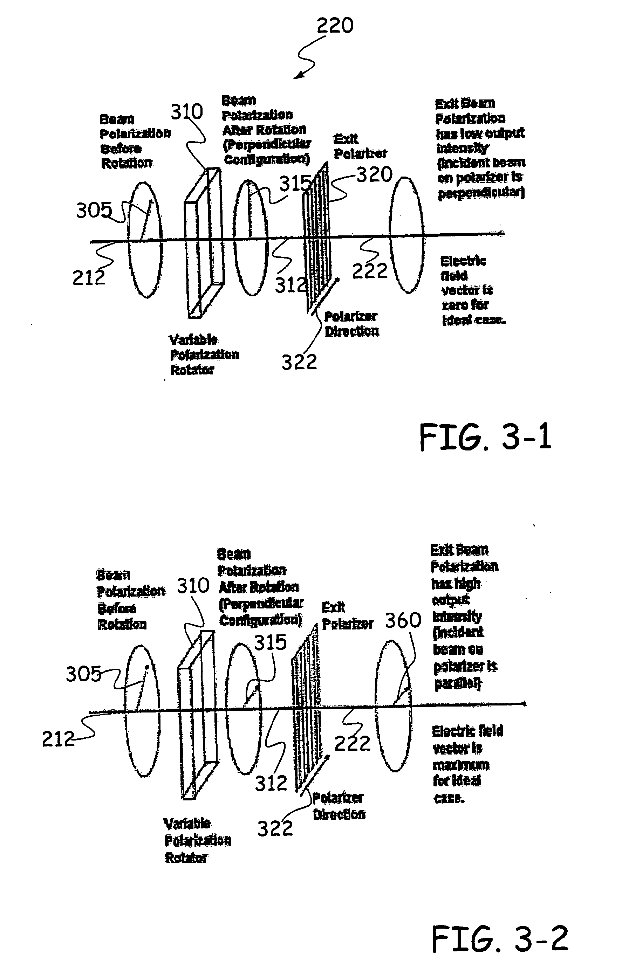

A VPA implementation of laser intensity adjusting mechanism 220 is illustrated in FIGS. 3-1 and 3-2. The VPA includes an adjustable polarization component 310 (a variable polarization rotator) which would be coupled to a controller (e.g., controller 230) and an exit polarizer or analyzer 320. The adjustable polarization component 310 is positioned relative to the source 210 (shown in FIG. 2) and to the exit polarizer 320 such that the laser beam enters component 310 first, and after exiting component 310 enters into the exit polarizer 320. The VPA uses adjustable polarization component 310 to rotate the incident beam 212 between two or more polarization states (two states shown, respectively, in FIGS. 3-1 and 3-2) relative to a polarization direction (represented at reference number 322) of the exit polarizer 320. The beam rotation before component 310 is illustrated at reference number 305. The rotated beam between rotator 310 and exit polarizer 320 is represented at reference number 312, and is shown to have an after rotation polarization as illustrated at reference number 315. Note the different beam polarizations 315 shown in FIGS. 3-1 and 3-2. As can be seen in FIGS. 3-1 and 3-2,

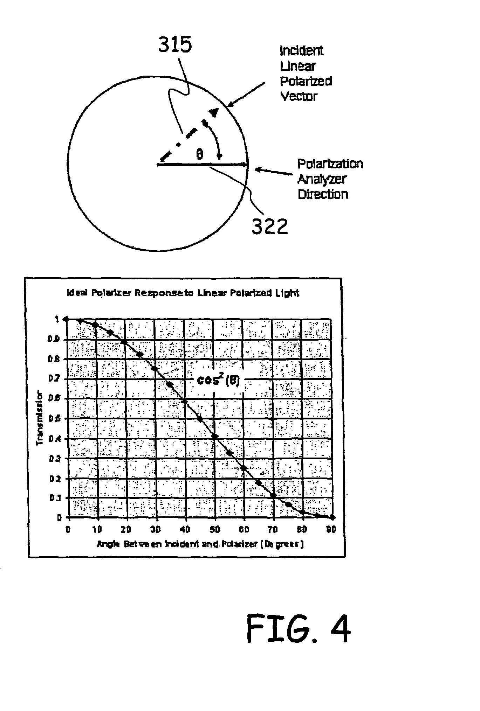

When the variable polarization rotator 310 is configured to rotate the beam polarization parallel to the exit polarizer direction 322 as shown in FIG. 3-2, the exit polarizer 320 will transmit the beam 222 at full intensity in this polarization direction (as represented at reference number 360). When the variable polarization rotator 310 is configured to rotate the beam polarization perpendiciular to the exit polarizer direction 322 as shown in FIG. 3-1, it will attenuate the beam 222 to its lowest intensity. If the polarization is rotated to a state that is between parallel and perpendicular, the transmission percentage is proportional to the cosine squared of the polarization rotation angle. A plot of transmission (where 0 represents full attenuation and 1 represents full transmission) of an ideal polarizer response is shown in FIG. 4 for the angle between the incident linear polarized vector 315 and the polarization exit polarizer (or analyzer) direction 322. The VPA is most efficient with the use of a linear polarized laser, but can be used with a non-polarized laser if another polarizer is introduced before the variable polarization rotator. This typically reduces the transmission by an additional fifty percent for randomly polarized light.

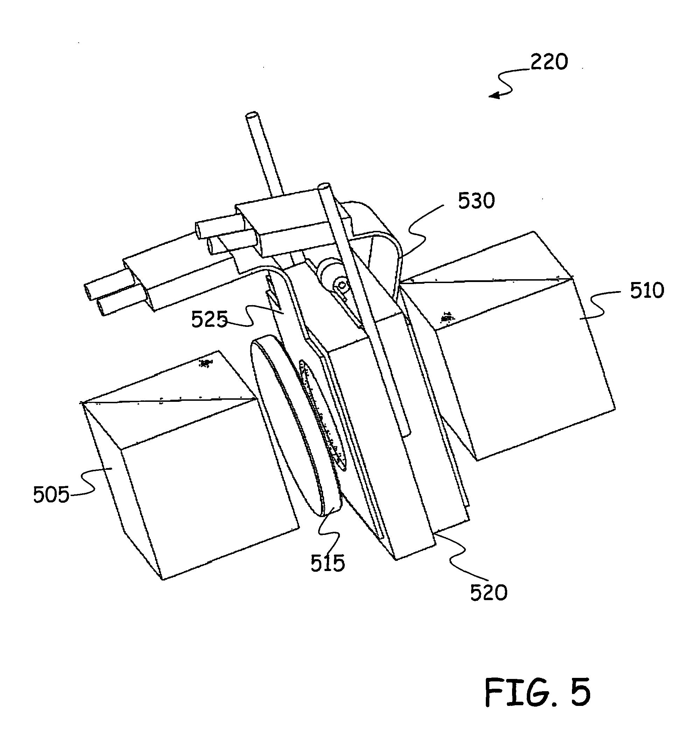

FIG. 5 is an illustration of one embodiment of a variable polarization attenuator type of laser intensity adjusting mechanism 220. As shown in FIG. 5, the VPA includes first and second polarization beam splitters (PBSs) 505 and 510, though some embodiments would use only PBS 510. PBS 505 is included in some embodiments to clean up the polarization of the laser beam 212, as it would be oriented to receive beam 212 prior to the beam passing through other components of mechanism 220. Positioned between PBS 505 and PBS 510 are a fixed half wave plate 515 and a variable wave plate 520. Variable wave plate 520 provides the variable polarization rotator 310 function. In some embodiments, heaters 525 and 530 are included and are positioned on either side of the variable wave plate 520 for thermal stability purposes.

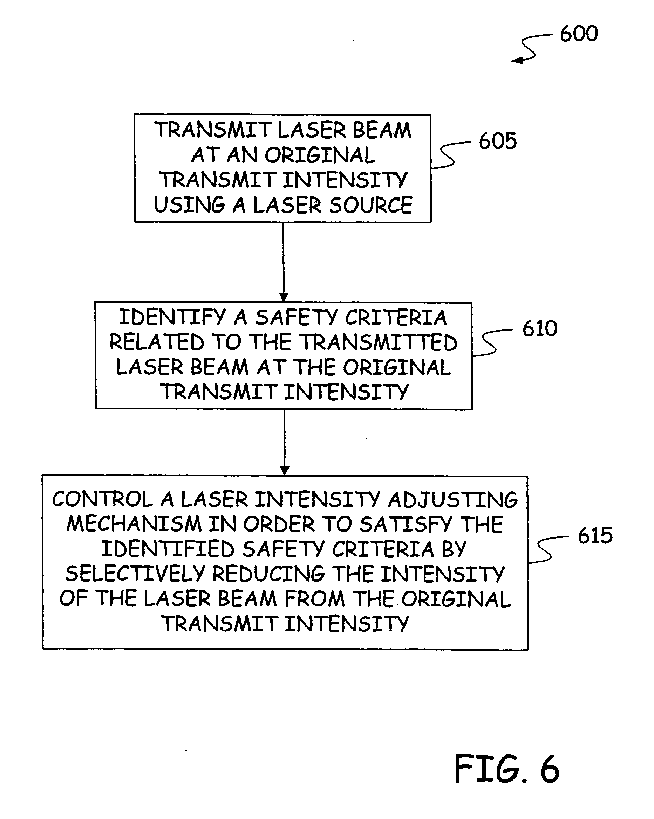

Referring now to FIG. 6, shown is a flow diagram 600 illustrating a method for controlling a laser transmitting system. At block 605 of FIG. 6, the method is shown to include the step of transmitting a laser beam at an original transmit intensity using a laser source. Then, at step 610, the method is shown to include the step of identifying a safety criteria related to the transmitted laser beam at the original transmit intensity. Finally, at step 615, the method is shown to include the step of controlling a laser intensity adjusting mechanism, positioned in the path of the transmitted laser beam, in order to satisfy the identified safety criteria by selectively reducing the intensity of the laser beam from the original transmit intensity. Implementation of these steps can be as described above with reference to the operation of system 110.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A laser transmitting system comprising:
a laser source configured to transmit a laser beam at an original transmit intensity;
a laser intensity adjusting mechanism positioned in the path of the transmitted laser beam at the original transmit intensity, the laser intensity adjusting mechanism being controllable to reduce the intensity of the laser beam from the original transmit intensity; and
a controller coupled to the laser intensity adjusting mechanism and configured to automatically control the laser intensity adjusting mechanism based upon a safety criterion.

2. The laser transmitting system of claim 1, wherein the laser source is configured to transmit the laser beam at a wavelength and at the original transmit intensity, which together are hazardous to a human eye.

3. The laser transmitting system of any preceding claim, wherein the safety criterion includes an altitude of an aircraft on which the laser transmitting system is positioned.

4. The laser transmitting system of any preceding claim, wherein the laser intensity adjusting mechanism includes a variable polarization attenuator.

5. The laser transmitting system of claim 4, wherein the variable polarization attenuator includes a variable polarization rotator and an exit polarizer positioned relative to the variable polarization rotator such that the laser beam passes through the exit polarizer after exiting from the variable polarization rotator.

6. The laser transmitting system of claim 5, wherein the controller is coupled to the variable polarization rotator and is configured to automatically control the variable polarization rotator in order to control a beam rotation of the laser beam exiting the variable polarization rotator, the intensity of the laser beam exiting the exit polarizer being a function of the beam rotation of the laser beam exiting the variable polarization rotator in a relation to a polarization direction of the exit polarizer.

7. The laser transmitting system of any preceding claim, wherein the laser source is configured to transmit the laser beam such that the laser beam is linearly polarized.

8. The laser transmitting system of any preceding claim, wherein the laser transmitting system is a lidar system.

9. The laser transmitting system of any preceding claim, wherein the laser transmitting system is a lidar aircraft system.

10. The laser transmitting system of claim 8 or 9, wherein the lidar system is a laser altimeter system.

11. The lidar aircraft system of claim 10, wherein the controller is configured to automatically control the laser intensity adjusting mechanism such that the laser intensity adjusting mechanism attenuates the laser intensity from the original transmit intensity when the aircraft is below a predetermined altitude, and such that the laser intensity adjusting mechanism does not attenuate the laser intensity from the original transmit intensity when the aircraft is above the predetermined altitude.

12. A method for controlling a laser transmitting system, the method comprising:
transmitting a laser beam at an original transmit intensity using a laser source;
identifying a safety criterion related to the transmitted laser beam at the original transmit intensity; and
controlling a laser intensity adjusting mechanism, positioned in the path of the transmitted laser beam, in order to satisfy the identified safety criterion by selectively reducing the intensity of the laser beam from the original transmit intensity.

13. The method of claim 12, wherein transmitting the laser beam at the original transmit intensity using the laser source further comprises transmitting the laser beam at a wavelength and at the original transmit intensity, which together are hazardous to a human eye within a predetermined proximity to the laser source.

14. The method of any of claims 12 to 13, wherein identifying the safety criterion related to the transmitted laser beam further comprises identifying an altitude of an aircraft on which the laser source is positioned and from which the laser beam is transmitted.

15. The method of claim 14, wherein controlling the laser intensity adjusting mechanism in order to satisfy the identified safety criterion further comprises selectively reducing the intensity of the laser beam, using the laser intensity adjusting mechanism, by an amount which is determined as a function of the identified altitude of the aircraft.

16. The method of claim 15, wherein controlling the laser intensity adjusting mechanism comprises controlling a variable polarization attenuator.
